# EUROPEAN PATENT SPECIFICATION

(11) **EP 3 287 688 B1**
(45) Date of publication and mention of the grant of the patent: **16.10.2019**
(21) Application number: 17183540.8
(22) Date of filing: 27.07.2017
(51) Int. Cl.: F21K 9/64, F21S 41/16, F21S 41/255, F21S 41/365

(54) **LIGHTING DEVICE FOR VEHICLE**
BELEUCHTUNGSVORRICHTUNG FÜR FAHRZEUG
DISPOSITIF D'ÉCLAIRAGE POUR VÉHICULE

(30) Priority: 02.08.2016 KR 20160098650
(43) Date of publication of application: 28.02.2018
(73) Proprietor: LG Electronics Inc., Yeongdeungpo-gu SEOUL, 07336 (KR)
(72) Inventor: PARK, Jun, 06772 Seoul (KR)
(74) Representative: Frenkel, Matthias Alexander

(56) References cited:
- WO-A1-2014/121707
- US-A1- 2012 206 931
- US-A1- 2015 375 672

## Description

### CROSS-REFERENCE TO RELATED APPLICATION

This application claims the priority benefit of Korean Patent Application No. 10-2016-0098650, filed on August 2, 2016 in the Korean Intellectual Property Office.

### BACKGROUND OF THE INVENTION

### 1. Field of the invention

The present invention relates to a lighting device for vehicle, and more particularly to a lighting device for vehicle, which shields part of light emitted from a light source and emits the rest of the light to the outside.

### 2. Description of the Related Art

A lighting device, such as a lamp, is installed in a vehicle so as to assist a driver to secure a field of vision by increasing surrounding illumination intensity or notify a current driving state of the vehicle to the outside.

The lighting device installed in the vehicle (hereinafter, referred to as a lighting device for vehicle) may include a head lamp which emits light toward the front of the vehicle, and a rear lamp which indicates the direction of travel of the vehicle or notifies the operation or non-operation of a brake.

The lighting device for vehicle may form a low beam or a high beam to ensure a driver's field of vision during night driving. Recently, the use of light-emitting diodes (LEDs) having high power efficiency and a long lifespan tends to increase.

Meanwhile, a laser diode with an irradiation distance longer than that of an LED can be used as a light source of the lighting device for vehicle. The patent application WO-A1-2014/121707 discloses a lighting device with a laser light source and a phosphor attached on a reflecting mirror. The patent application US-A1-2015/0375672 discloses a vehicle headlamp comprising a laser light source and a phosphor attached to a reflecting support base.

### SUMMARY OF THE INVENTION

The present invention has been made in view of the above problems, and it is one object of the present invention to provide a lighting device for vehicle, which can be made compact with a minimum number of components.

The lighting device for vehicle includes a light source part and a light distribution part, wherein the light source part comprises: a light source; a reflection unit on which light emitted by the light source is incident; a lens having a front surface, wherein the reflection unit is provided on a part of the front surface; and a reflective phosphor disposed behind the lens and configured to convert a wavelength of light reflected by the reflection unit and reflect the wavelength-converted light toward the lens, and wherein the light distribution part may include: a collimator lens disposed in front of the lens and configured to emit light, incident from the lens, in a form of parallel light rays; a focusing lens disposed in front of the collimator lens and configured to concentrate light, incident from the collimator lens, so as to form an image forming point; and a shield disposed at the image forming point and configured to shield at least part of light passing through the image forming point.

An optical axis of the collimator lens and an optical axis of the focusing lens may coincide with each other.

The parallel light rays may be parallel to an optical axis of the collimator lens.

The parallel light rays may be parallel to an optical axis of the focusing lens.

The focusing lens may have a convex rear surface and a flat front surface, and the shield may be parallel to the front surface of the focusing lens.

The shield may be disposed to face a lower portion of a front surface of the focusing lens.

The shield may be greater in size than the focusing lens.

The lighting device further includes a projection lens which is disposed in front of the focusing lens and has a convex front surface.

The image forming point may be positioned between the projection lens and the focusing lens.

The collimator lens, the focusing lens, and the projection lens may have respective optical axes coinciding with one another.

According to embodiments of the present invention, a light distribution part for generating a low beam may be configured without a mirror, and therefore, the size of the light distribution part can be minimized.

In addition, according to embodiments of the present invention, it is possible to minimize the size of a lens and make the lighting device compact since light is reduced by a light reducer, incident in the form of prism, and then reflected toward a reflective phosphor.

### BRIEF DESCRIPTION OF THE DRAWINGS

The embodiments will be described in detail with reference to the following drawings in which like reference numerals refer to like elements wherein:
FIG. 1 is a configuration diagram illustrating a light source part of a lighting device for vehicle according to a first embodiment of the present invention;
FIG. 2 is a configuration diagram illustrating a light distribution part of the lighting device for vehicle according to the first embodiment of the present invention;
FIG. 3 is a configuration diagram illustrating a lighting device for vehicle according to a first embodiment of the present invention;
FIG. 4 is a configuration diagram illustrating optical paths in the lighting device according to the first embodiment of the present invention;
FIG. 5 is a perspective view illustrating the lighting device for vehicle according to the first embodiment of the present invention;
FIG. 6 is a perspective view schematically illustrating some configurations of the lighting device for vehicle according to the first embodiment of the present invention;
FIG. 7 illustrates a plane shield, which is included in the first embodiment of the present invention, and a resulting image formed on a screen;
and FIG. 8 illustrates a cutoff shield, which is included in the first embodiment of the present invention, and a resulting image formed on a screen;
FIG. 9 is a configuration diagram illustrating a lighting device for vehicle according to an example useful for understanding the present invention; and
FIG. 10 is a configuration diagram illustrating optical paths in the lighting device for vehicle according to the example useful for understanding the present invention.

### DETAILED DESCRIPTION OF THE EMBODIMENTS

Hereinafter, embodiments of the present invention will be described in detail with reference to the accompanying drawings.

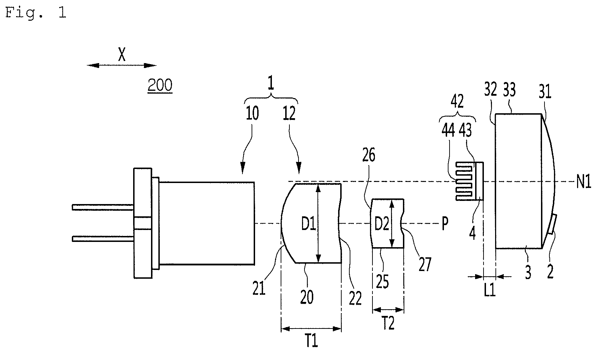

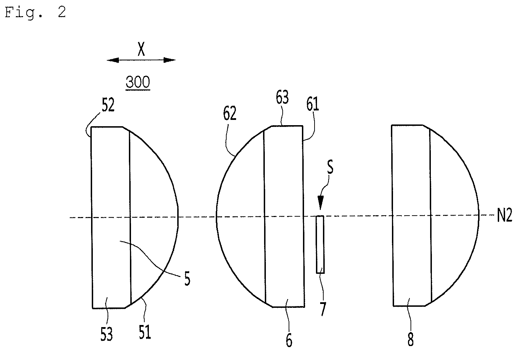

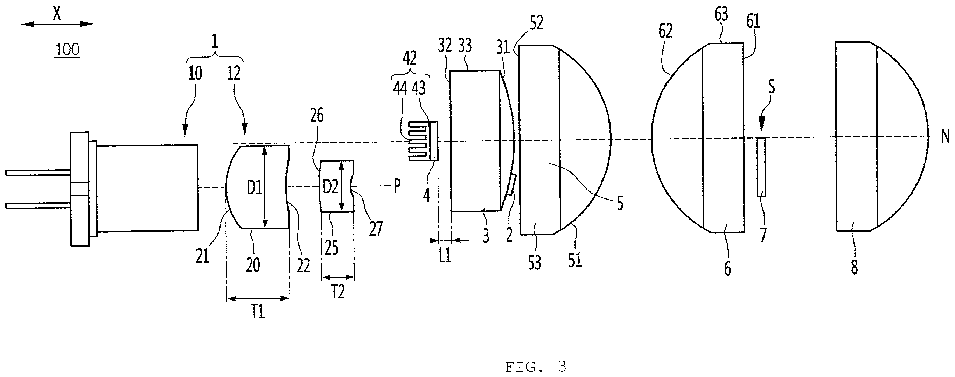

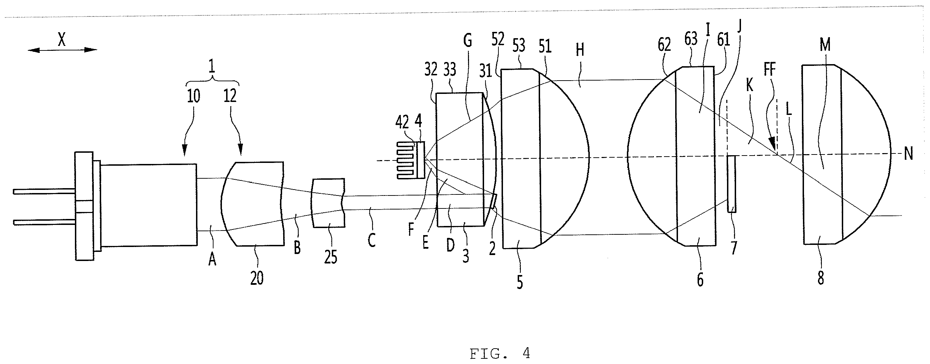

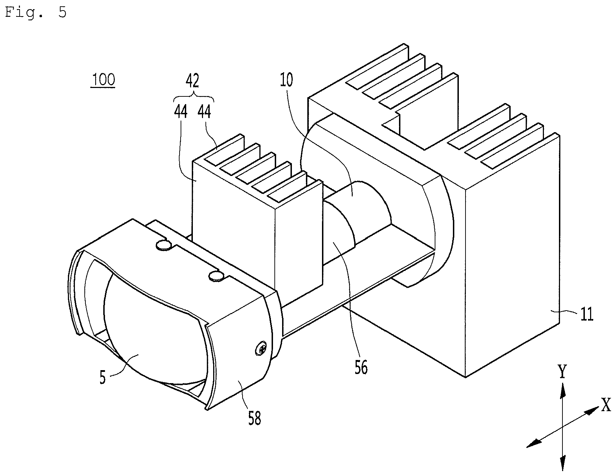

FIG. 1 is a configuration diagram illustrating a light source part of a lighting device for vehicle according to a first embodiment of the present invention; FIG. 2 is a configuration diagram illustrating a light distribution part of the lighting device for vehicle according to the first embodiment of the present invention; FIG. 3 is a configuration diagram illustrating a lighting device for vehicle according to a first embodiment of the present invention; FIG. 4 is a configuration diagram illustrating optical paths in the lighting device according to the first embodiment of the present invention; and FIG. 5 is a perspective view illustrating the lighting device for vehicle according to the first embodiment of the present invention.

The lighting device 100 for vehicle may include a light source device 1, a reflection unit 2, a lens 3, a reflective phosphor 4, a collimator lens 5, a focusing lens 6, and a shield 7.

The lighting device 100 for vehicle may largely consist of a light source part 200 and a light distribution part 300 depending on its functions. The light source part 200 may include the reflection unit 2, the lens 3, and the reflective phosphor 4. In addition, the light source part 200 may further include the collimator lens 5.

The lighting device 100 for vehicle may constitute a headlamp for vehicle, or may be used as a high beam device for generating and emitting a high beam or a low beam device for generating and emitting a low beam.

The light source device 1 may emit light toward the reflection unit 2. The light source device 1 may emit light toward the lens 3, and the light emitted toward the lens 3 may pass through the lens 3 and be then incident on the reflection unit 2. The light source device 1 may emit light toward a rear surface 32 of the lens 3, and the light incident on the rear surface 32 of the lens 3 from the light source device 1 may pass through the lens 3 and be then incident on a rear surface of the reflection unit 2.

The light source device 1 may include a light source 10. The light source 10 may receive electrical energy and convert the electrical energy into optical energy, and may be a light-emitting source, such as an ultra high voltage (UHV) mercury lamp, a light-emitting diode (LED), or a laser diode.

It is preferable that the light source 10 has excellent straightness and high efficiency and enables long-distance irradiation. The light source 10 is preferably a laser diode. It is preferable that the laser diode used as the light source 10 emits a blue-based laser beam having high efficiency.

As illustrated in FIG. 3, the light source 10 may be connected to a dissipation member 11 configured to heat generated by the light source 10. The dissipation member 11 may include a contact plate which comes into contact with the light source 10, and a dissipation fin which protrudes from the contact plate.

The light source device 1 may further include a light reducer 12 configured to reduce the size of light emitted from the light source 10 and emit resultant light toward the reflection unit 2. The light emitted from the light source 10 may pass through the light reducer 12 and be then emitted toward the reflection unit 2. The light reducer 12 will be later described in more detail.

The lens 3 may be formed greater than the reflective phosphor 4 and the reflection unit 2, and may be disposed in front of the reflective phosphor 4 to protect the reflective phosphor 4 and the reflection unit 2.

The lens 3 may have a circular or polygonal shape. The lens 3 may include a front surface 31, a rear surface 32, and a circumferential surface 33.

The front surface 31 of the lens 3 may be a curved surface that is convex toward the front of the lens 3. The rear surface 32 of the lens 3 may be a flat surface or a curved surface that is concave toward the front of the lens 3.

The lens 3 may have an optical axis N1. The lens 3 may be a condenser lens having a convex front surface 31, and the front surface of the lens 3 may be symmetric with reference to the optical axis N1. The optical axis N1 of the lens 3 may be a rotational symmetry axis or a central axis of the lens 3 and may mean a straight line passing through the center of the front surface 31 of the lens 3 and the center of the rear surface 32 of the lens 3.

The lighting device 100 for vehicle may further include the collimator lens 5 disposed in front of the lens 3.

The collimator lens 5 is formed grater than the lens 3. The optical axis of the collimator lens 5 may coincide with the optical axis N1 of the lens 3.

The collimator lens 5 may include a front surface 51, a rear surface 52, and a circumferential surface 53. The front surface 51 of the collimator lens 5 may be a curved surface convex toward the front of the collimator lens 5. The rear surface 52 of the collimator lens 5 may be a flat surface. The collimator lens 5 may be symmetric with reference to its own optical axis.

The reflective phosphor 4 may be disposed behind the lens 3, and may convert a wavelength of light reflected by the reflection unit 2 and reflect the light having the converted wavelength toward the lens 3.

Heat may be generated during the wavelength conversion of the light, so it is preferable that the reflective phosphor 4 is spaced apart from the lens 3. The reflective phosphor 4 may be disposed behind the lens 3 while being spaced apart from the lens 3.

The reflective phosphor 4 may be disposed to face the rear surface 32 of the lens 3, and reflect light toward the rear surface 32 of the lens 3.

The reflective phosphor 4 may be disposed on the optical axis N1 of the lens 3 while being spaced apart from the rear surface 32 of the lens 3. A front surface of the reflective phosphor 4 may be parallel to the rear surface 32 of the lens 3.

The reflective phosphor 4 may be disposed eccentric with respect to the optical axis N1 of the lens 3. However, in this case, the efficiency is low because a region of the lens 3 through which the light reflected by the reflective phosphor 4 passes is smaller than the case where the reflective phosphor 4 is disposed on the optical axis N1 of the lens 3.

In addition, in the case where the reflective phosphor 4 is disposed eccentric with respect to the optical axis N1 of the lens 3, a region of the collimator lens 5 through which light reflected by the reflective phosphor 4 passes may be asymmetric to the rest region of the collimator lens 5. In this case, it may be complicated and expensive to manufacture the collimator lens 5.

However, if the reflective phosphor 4 is disposed on the optical axis N1 of the lens 3, the collimator lens 5 may be symmetric with respect to the optical axis, and therefore, it is possible to reduce the manufacturing cost of the collimator lens 5.

That is, it is preferable that the reflective phosphor 4 is disposed on the optical axis N1 of the lens 3.

The reflective phosphor 4 may include a wavelength conversion layer facing the rear surface 32 of the lens 3, and a reflection unit disposed behind the wavelength conversion layer.

The wavelength conversion layer may be a wavelength conversion film and may include an opto ceramic. The wavelength conversion layer may be disposed in front of the reflection unit 2 and convert a wavelength of light reflected by the reflection unit 2. The wavelength conversion layer may be a wavelength conversion film that converts blue-base light, which is incident from the outside, into yellow-based light. The wavelength conversion layer may include a yellow-based opto ceramic.

The reflection unit may include a plate and a reflective coating layer coated on an outer surface of the plate. The plate may be made of metal. The phosphor reflection unit may support the wavelength conversion layer, and light passing through the wavelength conversion layer may be reflected by the reflection unit toward the rear surface 32 of the lens 3.

When blue-based light is reflected by the reflection unit 2 toward the reflective phosphor 4, a part of the blue-based light is reflected from the surface of the wavelength conversion layer. In this case, the blue-based light incident into the wavelength conversion layer may be excited in the wavelength conversion layer, and such light may be reflected by the phosphor reflection unit toward the front of the wavelength conversion layer.

The blue-based light reflected from the surface of the wavelength conversion layer and the yellow-based light emitted toward the front of the wavelength conversion layer may be mixed together, and white-based light may be emitted toward the front of the reflective phosphor 4. The white-based light may pass through the lens 2 and be then emitted toward the front of the lens 3.

A front-to-rear width of the lighting device for vehicle may depend on a distance L1 between the reflective phosphor 4 and the lens 3, and it is preferable that the reflective phosphor 4 is disposed in close proximity to the lens 3 as long as thermal damage to the lens 3 can be minimized.

The reflective phosphor 4 may include a dissipation member 42 that helps dissipation of the reflective phosphor 4. The dissipation member 42 may include a contact plate 43 which comes into contact with the reflective phosphor 4, and a dissipation fin 44 protruding from the contact plate 43.

The contact plate 43 may be attached to the rear surface of the reflection unit 2.

Meanwhile, the reflection unit 2 may be provided to reflect incident light toward the reflective phosphor 4.

The reflection unit 2 may be integrated with the lens 3, or may be provided separately from the lens 3 while being spaced apart from the lens 3.

The position of the reflection unit 2 may depend on the position of the reflective phosphor 4. In the case where the reflective phosphor 4 is disposed behind the lens 3, the reflection unit 2 may be disposed behind the lens 3 while being spaced apart from the lens 3, may be provided on the rear surface of the lens 3, may be provided on the front surface of the lens 3, or may be disposed in front of the lens 3 while being spaced apart from the lens 3.

Disposed behind the lens 3 while being spaced apart from the lens 3, the reflection unit 2 may reflect light, emitted by the light source device 1, toward a space between the reflective phosphor 4 and the lens 3.

Provided on the rear surface of the lens 3 and integrated with the lens 3, the reflection unit 2 may reflect light, emitted by the light source device 1, toward a space between the reflective phosphor 4 and the lens 3.

Provided on the front surface of the lens 3 and integrated with the lens 3, the reflection unit 2 may reflect light, emitted by the light source device 1 and passing through the lens 3, toward the lens 3 so that the reflected light is reflected again toward the reflective phosphor 4.

Disposed in front of the lens 3 while being spaced apart from the lens 3, the reflection unit 2 may reflect light, emitted by the light source device 1 and passing through the lens 3, toward the lens 3 so that the reflected light is reflected again toward the reflective phosphor 4.

In the case the reflection unit 2 is disposed in front of or behind the lens 3 while being spaced apart from the lens 3, a more number of components of the lighting device for vehicle may be required and the size of the lighting device may be bigger due to a distance between the lens 3 and the reflection unit 2.

It is preferable that the reflection unit 2 is integrated with the rear surface 32 or the front surface 31 of the lens 3 in order to make the lighting device compact with a minimum number of components.

In the case where the reflection unit 2 is provided on the entire rear surface or the entire front surface of the lens 3, the reflection unit 2 may reflect light reflected by the reflective phosphor 4 backwards, so that the light reflected by the reflective phosphor 4 cannot be emitted toward the front of the lens 3.

That is, it is preferable that the reflection unit 2 is provided on a part of the rear surface of the lens 3 or a part of the front surface of the lens 3. It is preferable that the reflection unit 2 is large enough for the lens 3 to secure a sufficient light emission region. It is preferable that the reflection unit 2 is disposed off the optical axis N1 of the lens 3. It is preferable that the reflection unit 2 is disposed between the optical axis N1 and the circumferential surface 33 of the lens 3.

The reflection unit 2 may be provided on a part of the rear surface of the lens 3 or a part of the front surface of the lens 3. The reflection unit 2 may be provided to reflect light, emitted by the light source device 1, toward the reflective phosphor 4.

The reflection unit 2 may reflect incident light toward the rear of the lens 3.

It is preferable that the position of the reflection unit 2 is determined considering a distance between the reflective phosphor 4 and the lens 3.

Since it is preferable that the reflective phosphor 4 is disposed close to the rear surface 32 of the lens 3, it is preferable that the reflection unit 2 is provided on the front surface 31 of the lens 3.

That is, the reflection unit 2 may be provided on a part of the front surface of the lens 3, and light emitted by the light source device 1, especially the light reducer 12, may pass through the lens 3 and be then incident on the reflection unit 2. In addition, the light reflected by the reflection unit 2 may pass through the lens 3 and be then incident on the reflective phosphor 4. Light whose wavelength is converted by the reflective phosphor 4 may pass through the lens 3 and be then emitted forwards.

The lens 3 may be a 3-path lens through which light passes three times, and the lighting lamp for vehicle may be made compact using the 3-path lens.

The reflection unit 2 is formed in a part of a convex front surface 31 of the lens 3 along the convex front surface 31, and may be formed to have an arc-shaped cross section. When viewed from the front of the lens 3, the reflection unit 2 may have a circular or polygonal shape.

The reflection unit 2 may be a concave mirror formed in the front surface 31 of the lens 3. The reflection unit 2 may have a convex front surface and a concave rear surface.

The front surface of the reflection unit 2 may face the collimator lens 5, which will be described later, and may be disposed between the lens 3 and the collimator lens 5 to be protected thereby.

The reflection unit 2 may be a reflective coating layer coated on the front surface 31 of the lens 3, except the optical axis N1 of the lens 3. In another example, the reflection unit 2 may be a reflection sheet attached to the front surface 31 of the lens 3, except for the optical axis N1 of the lens 3.

The light reducer 12 may be disposed between the lens 3 and the light source 10. The light reducer 12 may be disposed between the rear surface 32 of the lens 3 and a front surface of the light source 10 while being spaced apart from the lens 3 and the light source 10, respectively.

The light reducer 12 may be spaced apart from the optical axis N1 of the lens 3. A part of the light reducer 12 may be disposed on the optical axis N1 of the lens 3, but an optical axis P of the light reducer 12 may be spaced apart from the optical axis N1 of the lens 3.

The light reducer 12 may be disposed behind the lens 3 and emit light in a direction parallel to the optical axis N1 of the lens 3. The optical axis P of the light reducer 12 may be parallel to the optical axis N1 of the lens 3.

The light reducer 12 may include: a first reducer lens 20 which reduces a width of light emitted from the light source 10; and a second reducer lens 25 which is spaced apart from the first reducer lens 20 and reduces a width of light emitted from the first reducer lens 20.

The first reducer lens 20 includes a light entrance surface 21 and a light exit surface 22, and the second reducer lens 25 includes a light entrance surface 26 and a light exit surface 27.

The light exit surface 22 of the first reducer lens 20 and the light entrance surface 26 of the second reducer lens 25 may be spaced apart from each other. The light exit surface 22 of the first reducer lens 20 and the light entrance surface 26 of the second reducer lens 25 may be spaced apart from each other in parallel with the optical axis N1 of the lens 3. The first reducer lens 20 and the second reducer 25 may be spaced apart from each other with air therebetween.

The first reducer lens 20 and the second reducer lens 25 may be spaced apart from each other in a front-to-rear direction. The light exit surface 22 of the first reducer lens 20 and the light entrance surface 26 of the second reducer lens 25 may be spaced apart from each other in the front-to-rear direction.

The first reducer lens 20 may be disposed between the light source 10 and the second reducer lens 25, and the second reducer lens 25 may be disposed between the first reducer lens 20 and the lens 3.

The light entrance surface 21 of the first reducer lens 20 may face the light source 10.

The optical axis P of the first reducer lens 20 may coincide with the optical axis of the second reducer lens 25.

The light exit surface 27 of the second reducer lens 25 may face the rear surface 32 of the first lens 3. It is preferable that the light exit surface 27 of the second reducer lens 25 does not face the dissipation member 42 or the reflective phosphor 4.

Each of the first reducer lens 20 and the second reducer lens 25 may have a convex light entrance surface on which light is to be incident. Each of the first reducer lens 20 and the second reducer lens 25 may have a concave light exit surface from which light is emitted.

The rear surface of the first reducer lens 20 may be a light entrance surface 21 that is a curved surface concave toward the rear of the first reducer lens 20. Light incident from the light source 10 may be refracted from the convex light entrance surface 21, and light passing through the first reducer lens 20 may be gradually reduced in width, as shown in FIG. 2.

The front surface of the first reducer lens 20 may be a light exit surface 22 that is a curved surface concave toward the rear of the first reducer lens 20. The front surface of the first reducer lens 20 may be the light exit surface 22 which is concave entirely or only at the center thereof.

A part of the light exit surface 22 of the first reducer lens 20 may face the light entrance surface 26 of the second reducer lens 25.

The rear surface of the second reducer lens 25 may be a light entrance surface 26 that is a curved surface convex toward the rear of the second reducer lens 25. Light emitted by the first reducer lens 20 and passing through the air between the first reducer lens 20 and the second reducer lens 25 may be refracted from the convex light entrance surface 26 of the second reducer lens 25, and light passing through the second reducer lens 25 may be gradually reduced in width.

The front surface of the second reducer lens 25 may be a light exit surface 27 that is a curved surface concave toward the rear of the second reducer lens 25. The front surface of the second reducer lens 25 may be the light exit surface 27 which is concave entirely or only at the center thereof.

The entire light exit surface 27 of the second reducer lens 25 may face the rear surface 32 of the lens 3.

A diameter D2 of the second reducer lens 25 may be smaller than a diameter D1 of the first reducer lens 20. A thickness T2 of the second reducer lens 25 may be thinner than a thickness T1 of the first reducer lens 20.

Since light is primarily reduced by the first reducer lens 20, the second reducer lens 25 may be formed smaller than the first reducer lens 20 in order to increase efficiency in use of an ambient space.

The light entrance surface 21 of the first reducer lens 20 and the light entrance surface 26 of the second reducer lens 25 may have the same curvature or a different curvature.

A degree of reduction in width of light passing through the first reducer lens 20 may heavily depend on a curvature of the light entrance surface 21 of the first reducer lens 20. If the light entrance surface 21 of the first reducer lens 20 has a great curvature, light passing through the first reducer lens 20 may be greatly reduced in width.

That is, if the light entrance surface 21 of the first reducer lens 20 has a great curvature, it is possible to reduce the size of the second reducer lens 25, the reflection unit 2, and the lens 3.

Light whose width is primarily reduced by the first reducer lens 20 may be incident on the light entrance surface 26 of the second reducer lens 25, and it is preferable that the light entrance surface 26 of the second reducer lens 25 is formed not to reduce light excessively.

In the case where the light entrance surface 21 of the first reducer lens 20 and the light entrance surface 26 of the second reducer lens 25 have a different curvature, it is preferable that a curvature of the light entrance surface 21 of the first reducer lens 20 is greater than a curvature of the light entrance surface 26 of the second reducer lens 25.

The light exit surface 22 of the first reducer lens 20 and the light exit surface 27 of the second reducer lens 25 may have the same curvature or a different curvature.

A width of light emitted by the first reducer lens 20 may differ according to the curvature of the light exit surface 22 of the first reducer lens 20.

The light exit surface 22 of the first reducer lens 20 may have a curvature where light passing through the light exit surface 22 is emitted in a direction parallel to the optical axis of the first reducer lens 20. In addition, the light exit surface 22 of the first reducer lens 20 may have a curvature where a width of light passing through the light exit surface 22 of the first reducer lens 20 is gradually reduced between the light exit surface 22 of the first reducer lens 20 and the light entrance surface 26 of the second reducer lens 25.

A width of light incident on the reflection unit 2 may be changed according to a curvature of the light exit surface 27 of the second reducer lens 25. It is preferable that the light exit surface 27 of the second reducer lens 25 is in a shape which allows light passing through the light exit surface 27 of the second reducer lens 25 to be incident on the reflection unit 2 in a direction parallel to the second reducer lens 25.

In the case where the light exit surface 22 of the first reducer lens 20 and the light exit surface 27 of the second reducer lens 25 have a different curvature, it is preferable that the curvature of the light exit surface 27 of the second reducer 25 is greater than the curvature of the light exit surface 22 of the first reducer lens 20.

Meanwhile, the lighting device for vehicle may further include a light reducer supporter 56 (see FIG. 3) that supports the light reducer 12.

The light reducer supporter 56 may be formed to surround the light reducer 12. The light reducer supporter 56 may be elongated in a direction parallel to the optical axis N1 of the lens 3, and a light transmission passage through which light passes may be formed inside the light reducer supporter 56.

In addition, the lighting device for vehicle may further include a lens holder 58 that supports the lens 3 and the collimator lens 5.

The light distribution part 300 may include a focusing lens 6, a shield 7, and a projection lens 8. In addition, the light distribution part 300 may further include the collimator lens 5. The collimator lens 5 may be included in the light source part 200 or the light distribution part 300.

The collimator lens 5 may emit light, incident on the rear surface 32, in the form of parallel light rays. The parallel light rays may be parallel to the optical axis of the collimator lens 5.

The light incident on the rear surface 52 of the collimator lens 5 may be light emitted by the lens 3. The light emitted by the lens 3 may not be parallel light rays, but scattered light.

The focusing lens 6 may be disposed in front of the collimator lens 5.

An optical axis N2 of the focusing lens 6 may coincide with the optical axis of the collimator lens 5. Alternatively, a front surface 61 of the focusing lens 6 and the rear surface 52 of the collimator lens 5 may be disposed parallel to each other.

The parallel light rays may be parallel to the optical axis N2 of the focusing lens 6.

The focusing lens 6 may include the front surface 61, a rear surface 62, and a circumferential surface 63. The front surface 61 of the focusing lens 6 may be a flat surface. The rear surface 62 of the focusing lens 6 may be a curved surface concave toward the rear of the focusing lens 6. The focusing lens 6 may be symmetric with respect to the optical axis N2.

The focusing lens 6 may concentrate incident light on the rear surface 62, and emit the concentrated light. The focusing lens 6 may concentrate light incident on the rear surface 62 to form an image forming point S. The image forming point S of the focusing lens 6 may be formed on the front of the focusing lens 6.

An image may be formed at the image forming point S. If a screen 9 is located at the image forming point, an image may be formed on the screen 9.

By concentrating light incident on the rear surface 62, the focusing lens 6 may form a focus FF. The focus FF indicates a point where rays of light passing through a lens converge. The focus FF of the focusing lens 6 may be formed on the front of the focusing lens 6. The shield 7 may be disposed in front of the focusing lens 6. The shield 7 may be a flat member. The shield 7 may be disposed parallel to the front surface 61 of the focusing lens 6. In another example, the shield 7 may be disposed parallel to the rear surface 52 of the collimator lens 5. In yet another example, the shield 7 may be
disposed vertical to the optical axis N2 of the focusing lens 6.

The shield 7 may shield a part of light that passes through the image forming point S of the focusing lens 6. That is, a pattern of light passing through the image forming point S may differ according to a shape of the shield 7. Thus, it is possible to realize various light distribution patterns by changing the shape of the shield 7.

The shield 7 may be disposed to face a lower portion of the front surface 61 of the focusing lens 6. The focusing lens 6 may be divided along the optical axis N2 into an upper portion and a lower portion. The upper portion is a portion above the optical axis N2, and the lower portion is a portion below the optical axis N2.

The shield 7 may be a member including a flat surface, and the front surface 61 of the focusing lens 6 may be a flat surface. The fact that the shield 7 is disposed to face the front surface 61 of the focusing lens 6 may mean that the flat surface of the shield 7 and the front surface 61 of the focusing lens 6 can be disposed parallel to each other.

Thus, the shield 7 may be disposed parallel to the focusing lens 6 and face a portion of the focusing lens 6 below the optical axis N2 of the focusing lens 6.

As the shield 7 is disposed to face the lower portion of the front surface 61 of the focusing lens 6, the light distribution part 300 may implement a low beam.

The image forming point S of the focusing lens 6 may be spaced apart at a predetermined distance from the front surface 61 of the focusing lens 6. As the focusing lens 6 is able to concentrate rays of light, the size of light passing through the focusing lens 6 may be reduced as compared to the size of light which has yet to pass through the focusing lens 6.

Thus, the shield 7 may be smaller than the focusing lens 6. In another example, the shield 7 may be smaller than the front surface 61 of the focusing lens 6.

The light distribution part 300 may further include the projection lens 8. The projection lens 8 may include a front surface, a rear surface, and a circumferential surface. The front surface of the projection lens 8 may be a curved surface convex toward the front of the projection lens 8. The rear surface of the projection lens 8 may be a flat surface. The projection lens 8 may be symmetric with reference to its own optical axis.

The optical axis of the projection lens 8 may coincide with the optical axis N2 of the focusing lens 6. Alternatively, the optical axis of the projection lens 8 may coincide with the optical axis of the collimator lens 5.

The rear surface of the projection lens 8 may be parallel to the front surface 61 of the focusing lens 6. In another example, the rear surface of the projection lens 8 may be parallel to the rear surface 52 of the collimator lens 5.

The shield 7 may be disposed to face a lower portion of the rear surface of the projection lens 8. The projection lens 8 may be divided along its optical axis into an upper portion and a lower portion. The upper portion may be a portion above the optical axis, and the lower portion may be a portion below the optical axis.

The shield 7 may be a member including a flat surface, and the rear surface of the projection lens 8 may be a flat surface. In this case, the fact that the shield 7 is disposed to face the rear surface of the projection lens 8 may mean that the flat surface of the shield 7 and the rear surface of the projection lens 8 may be disposed parallel to each other.

Thus, the shield 7 may be disposed parallel to the projection lens 8 and face a portion of the projection lens 8 below the optical axis of the projection lens 8.

The projection lens 8 may be disposed so that an image forming point S of the focusing lens 6 is positioned between the projection lens 8 and the focusing lens 6.

The focus FF of the focusing lens 6 may be formed on the front of the focusing lens 6. In addition, the projection lens 8 may be disposed so that the focus FF of the focusing lens 6 is positioned between the projection lens 8 and the focusing lens 6. The light distribution part may be configured such that the collimator lens 5, the focusing lens 6, the shield 7, and the projection lens 8 are arranged along the X axis in order named.

The light source part 200 and the light distribution part 300 may form one light emitting device 100. The light emitting device 100 may be configured such that the light source part 200 and the light distribution part 300 are arranged along the X axis in order named.

The optical axis N1 of the lens 3 and the optical axis of the collimator lens 5 may coincide with each other. In addition, the optical axis N1 of the lens 3 and the optical axis N2 of the focusing lens 6 may coincide with each other.

The lens 3, the collimator lens 5, the focusing lens 6, and the projection lens 8 may have respective optical axes coinciding with one other (which means the respective optical axes may be the same as the optical axis N).

Since light radially emitted from the lens 3 is incident on the rear surface 52 of the collimator lens 5, the collimator lens 5 may be formed larger than the lens 3. In addition, the focusing lens 6 may be formed larger than the lens 3.

Hereinafter, there will be provided description about operation of the aforementioned configuration of the present invention.

The following description is about an example in which the light source 10 emits blue-based light and the reflective phosphor 4 converts the blue-based light into yellow-based light.

First of all, when the light source 10 is turned on, blue-based light A may be emitted by the light source 10. The light A emitted by the light source 10 may be incident on the light reducer 12 in a direction parallel to the optical axis of the light source 10.

The light A emitted by the light source 10 in the direction parallel to the optical axis of the light source 10 may be incident on the light entrance surface 21 of the first reducer lens 20, and may be refracted from the light entrance surface 21 of the first reducer lens 20 to be reduced in width.

The light refracted from the light entrance surface 21 of the first reducer lens 20 may pass through the first reducer lens 20 and be then emitted from the light exit surface 22 of the first reducer lens 20.

Light B emitted from the light exit surface 22 of the first reducer lens 20 may be incident on the light entrance surface 26 of the second reducer lens 25 in a direction parallel to the optical axis of the second reducer lens 25. Alternatively, the light B may be gradually reduced in width between the light exit surface 22 of the first reducer lens 20 and the light entrance surface 26 of the second reducer lens 25 and then incident on the light entrance surface 26 of the second reducer lens 25.

The light incident on the light entrance surface 26 of the second reducer lens 25 may pass through the second reducer lens 25 and emitted from the light exit surface 27 of the second reducer lens 25 in the direction parallel to the optical axis of the second reducer lens 25.

That is, the light A emitted by the light source 10 may be reduced in width while passing through the first reducer lens 20, the air between the first reducer and the second reducer, and the second reducer lens 25 in order named. Light C having a reduced width may be incident on the rear surface 32 of the lens 2 in a direction parallel to the optical axis of the second reducer lens 25.

Light D incident on the rear surface 32 of the lens 3 may pass through the rear of the reflection unit 2 and be then incident on the rear surface of the reflection unit 2. Alternatively, the light D may be reflected from the rear surface of the reflection unit 2 toward the lens 3.

Light E reflected by the reflection unit 2 may be reflected in a direction toward the optical axis N1 of the lens 3 and refracted from the rear surface 32 of the lens 3.

Light F refracted from the rear surface 32 of the lens 3 may pass through between the rear surface 32 of the lens 3 and the reflective phosphor 4 and be then incident on the reflective phosphor 4.

A wavelength of the light incident on the reflective phosphor 4 may be converted by the reflective phosphor 4, and white-based light F may be emitted by the reflective phosphor 4 toward the rear surface 32 of the lens 3.

The light emitted by the reflective phosphor 4 toward the rear surface 32 of the lens 3 may pass through the lens 3, and resulting light G may pass through the front surface 31 of the lens 3 and be then incident on the collimator lens 5 through the rear surface 52 of the collimator lens 5.

The light incident on the collimator lens 5 may pass through the collimator lens 5 and be then refracted from the front surface 51 of the collimator lens 5 to be emitted toward the front of the collimator lens 5 in a direction parallel to the optical axis of the collimator lens 5.

Light H emitted toward the front of the collimator lens 5 may be parallel light rays.

The light H emitted toward the front of the collimator lens 5 may be incident on the focusing lens 6 through the rear surface 62 of the focusing lens 6.

Light I incident on the focusing lens 6 may pass through the focusing lens 6 and be then refracted from and concentrated on the front surface 61 of the focusing lens 6 to be emitted toward the front of the focusing lens 6.

Light J emitted toward the front of the focusing lens 6 may pass through the image forming point S and the focus FF. A part of the light J emitted toward the front of the focusing lens 6 may be shielded by the shield 7 disposed at the image forming point S.

The shield 7 may be disposed to face the lower portion of the front surface 61 of the focusing lens 6. At the image forming point S, a part of the light J emitted toward the front of the focusing lens 6, the part which passes through a portion below the optical axis of the focusing lens 6, may be shielded by the shield 7.

Light K which is a part of the light J emitted toward the front of the focusing lens 6 and which is not shielded by the shield 7 may be light passing through a portion above the optical axis N2 of the focusing lens 6.

The light K not shielded by the shield 7 may converge at one point, and be then
emitted toward the portion of below the optical axis N2 of the focusing lens 6.

Light L1 emitted toward the portion below the optical axis N2 of the focusing lens 6 may be incident on the projection lens 8 through the rear surface of the projection lens 8.

Light M incident on the projection lens 8 may pass through the projection lens 8 and be then refracted from the front surface of the projection lens 8 to be emitted toward the front of the projection lens 8 in a direction parallel to the optical axis of the projection lens 8.

The light emitted toward the front of the projection lens 8 may be a low beam. In addition, the light emitted toward the front of the projection lens 8 may be parallel light rays.

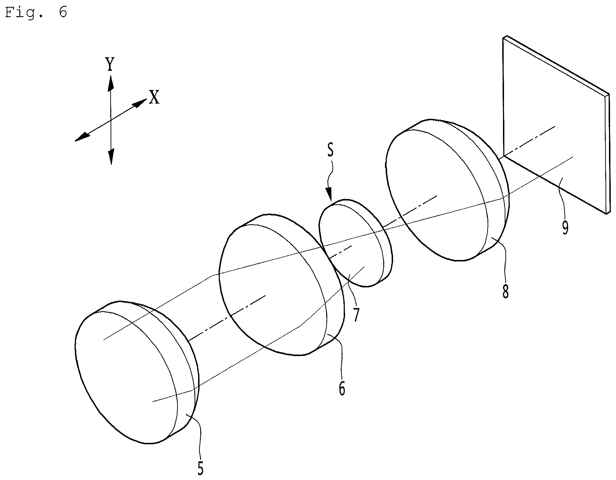

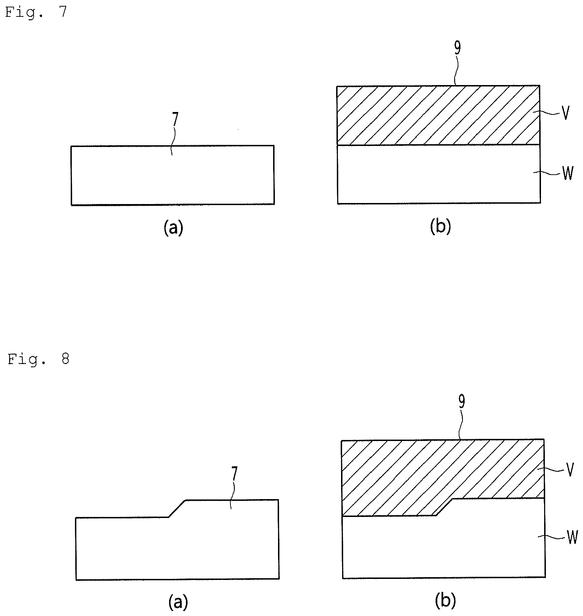

FIG. 6 is a perspective view schematically illustrating some configurations of the lighting device for vehicle according to the first embodiment of the present invention; FIG. 7 illustrates a plane shield, which is included in the first embodiment of the present invention, and a resulting image formed on a screen; and FIG. 8 illustrates a cutoff shield, which is included in the first embodiment of the present invention, and a resulting image formed on a screen.

FIG. 6 illustrates the collimator lens 5, the focusing lens 6, the shield 7, the projection lens 8, and the screen 9. Various light distribution patterns may be formed according to a shape of the shield 7 disposed at the image forming point S, and such light distribution patterns can be seen if the screen 9 is placed in front of the projection lens 8.

In (a) of FIG. 7, a plane shield 7 having a rectangular shape is illustrated. In (b) of FIG. 7, an image is illustrated which is formed when the shield 7 is arranged in the light distribution part 300. If the plane shield 7 is disposed at the image forming point S of the focusing lens 6, a light distribution characteristic as shown in (b) of FIG. 7 may be seen on the screen 9.

A region in which light is shielded by the plane shield 7 may be region V in the screen 9, and the region may be seen dark. A region in which light is not shielded by the plane shield 7 may be region W in the screen 9, and the region may be seen bright.

In (a) of FIG. 8, a cutoff shield 7 is illustrated from which part of a rectangular-shaped shield 7 is removed. In (b) of FIG. 8, an image formed on the screen 9 when the cutoff shield 7 is disposed at the imaging forming point S of the focusing lens 6 is illustrated. If the cutoff shield 7 is disposed at the image forming point S of the focusing lens 6, a light distribution characteristic as shown in (b) of FIG. 8 may be seen on the screen 9.

A region in which light is shielded by the cutoff shield 7 may be region V in the screen 9, and the region may bee seen dark. A region in which light is not shielded by the cutoff shield 7 may be region W in the screen 9, and the region may be seen bright. In addition, with the use of the cutoff shield 7, a cutoff shape may be created at the boundary between region V and region W.

Thus, by selecting a shape of the shield 7 based on a purpose of light distribution, it is possible to realize various patterns of light distribution, including a low beam.

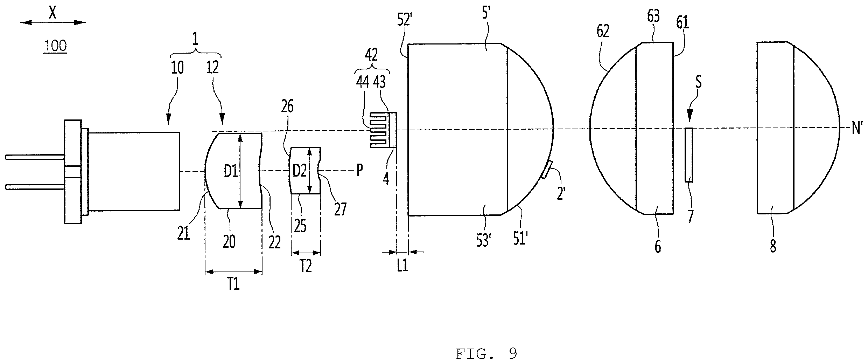

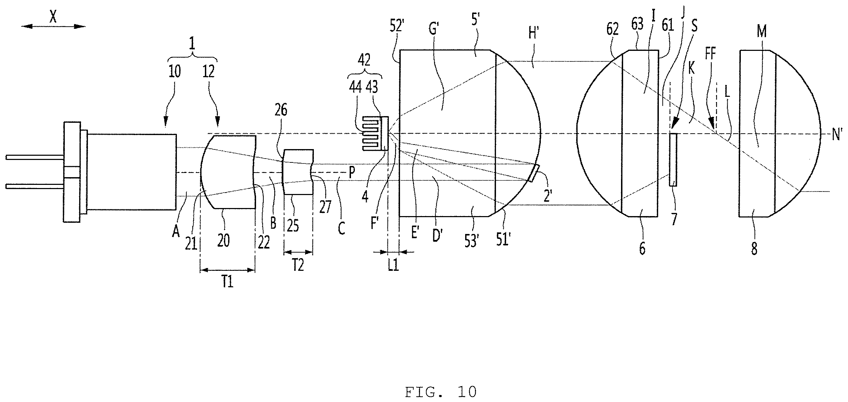

FIG. 9 is a configuration diagram illustrating a lighting device for vehicle according to an example useful for understanding the present invention; and FIG. 10 is a configuration diagram illustrating optical paths in the lighting device for vehicle according to the example useful for understanding the present invention.

Hereinafter, the following description is mainly about configurations and operations different from those of the first embodiment, and the same or similar configurations will be omitted.

In the lighting device according to the first embodiment, the lens 3 having a reflection unit and the collimator lens 5 may be separate from each other. On contrary, the lighting device according to the example may use a single lens to implement functions of the lens 3 and the collimator lens 5.

A collimator lens 5' according to the example may be thicker than the collimator lens 5 according to the first embodiment. Alternatively, a width of a circumferential surface 53' of the collimator lens 5' according to the example may be greater than a width of the circumferential surface 53 of the collimator lens 5 according to the first embodiment.

The collimator lens 5' according to the example may include a reflection unit 2' on a front surface 51' thereof. Accordingly, the collimator lens 5' according to the example may reflect light, incident on a rear surface 52', toward the reflective phosphor 4. In addition, the collimator lens 5' according to the example may emit light, emitted by the reflective phosphor 4 and incident on the rear surface 52' of the collimator lens 5', in the form of parallel light rays.

Hereinafter, operations of the lighting device according to the example will be described mainly about difference from the first embodiment.

Light A emitted by a light source is reduced in width while passing through the first reducer lens 20, the air between the first reducer lens and the second reducer lens 25, and the second reducer lens 25 in order named. Light C having a reduced width may be incident on the rear surface 52' of the collimator lens 5' in a direction parallel to the optical axis of the second reducer lens 25.

Light D' incident on the rear surface 52' of the collimator lens 5' may pass through the rear of the reflection unit 2' of the collimator lens 5' and be then incident on the rear surface of the reflection unit 2' and reflected from the rear surface of the reflection unit 2' toward the collimator lens 5'.

Light E' reflected by the reflection unit 2' may be reflected in a direction toward an optical axis N' of the collimator lens 5' and refracted from the rear surface 52' of the collimator lens 5'.

Light F' refracted from the rear surface 52' of the collimator lens 5' may pass through between the rear surface 52' of the collimator lens 5' and the reflective phosphor 4 and be then incident on the reflective phosphor 4.

A wavelength of the light incident on the reflective phosphor 4 may be converted by the reflective phosphor 4, and white-based light F' may be emitted by the reflective phosphor 4 toward the rear surface 52' of the collimator lens 5'.

The light emitted by the reflective phosphor 4 toward the rear surface 52' of the collimator lens 5' may pass through the collimator lens 5', and resulting light G' may be refracted from the front surface 51' of the collimator lens 5' and be then emitted toward the front of the collimator lens 5' in a direction parallel to the optical axis of the collimator lens 5'.

Light H' emitted toward the front of the collimator lens 5' may be parallel light rays.

The light H' emitted toward the front of the collimator lens 5' may be incident on the focusing lens 6 through the rear surface 62 of the focusing lens 6.

## Claims

1. A lighting device (100) for vehicle, which comprises a light source part (200) and a light distribution part (300),
wherein the light source part (200) comprises:
a light source (10);
a reflection unit (2) on which light emitted by the light source is incident;
a lens (3) having a front surface, wherein the reflection unit is provided on a part of the front surface; and
a reflective phosphor (4) disposed behind the lens and configured to convert a wavelength of light reflected by the reflection unit and reflect the wavelength-converted light toward the lens, and
wherein the light distribution part (300) comprises:
a collimator lens (5) disposed in front of the lens and configured to emit light, incident from the lens, in a form of parallel light rays;
a focusing lens (6) disposed in front of the collimator lens and configured to concentrate light, incident from the collimator lens, so as to form an image forming point;
a shield (7) disposed at the image forming point and configured to shield at least part of light passing through the image forming point; and
a projection lens (8) which is disposed in front of the focusing lens and has a convex front surface.

2. The lighting device (100) according to claim 1, wherein an optical axis of the collimator lens (5) and an optical axis of the focusing lens (6) coincide with each other.

3. The lighting device (100) according to claim 1 or 2, wherein the parallel light rays are parallel to an optical axis of the collimator lens (5).

4. The lighting device according to any one of claims 1 to 3, wherein the parallel light rays are parallel to an optical axis of the focusing lens (6).

5. The lighting device (100) according to any one of claims 1 to 4,
wherein the focusing lens (6) has a convex rear surface and a flat front surface, and
wherein the shield (7) is parallel to the front surface of the focusing lens.

6. The lighting device (100) according to any one of claims 1 to 5, wherein the shield (7) is disposed to face a lower portion of a front surface of the focusing lens.

7. The lighting device (100) according to any one of claims 1 to 6, wherein the shield (7) is greater in size than the focusing lens.

8. The lighting device (100) according to any one of claims 1 to 7, wherein the image forming point is positioned between the projection lens (8) and the focusing lens (6).

9. The lighting device (100) according to claim 8, wherein the collimator lens 5), the focusing lens (6), and the projection lens (8) have respective optical axes coinciding with one another.

## Patentansprüche

1. Beleuchtungsvorrichtung (100) für ein Fahrzeug, welche ein Lichtquellenteil (200) und ein Lichtverteilungsteil (300) umfasst,
wobei das Lichtquellenteil (200) umfasst:
eine Lichtquelle (10);
eine Reflexionseinheit (2), auf die von der Lichtquelle emittiertes Licht einfällt;
eine Linse (3) mit einer Vorderfläche, wobei die Reflexionseinheit auf einem Teil der Vorderfläche vorgesehen ist; und
einen hinter der Linse angeordneten reflektierenden Leuchtstoff (4), der dazu eingerichtet ist, eine Wellenlänge von durch die Reflexionseinheit reflektierten Lichts umzuwandeln und das wellenlängenumgewandelte Licht zur Linse hin zu reflektieren, und
wobei das Lichtverteilungsteil (300) umfasst:
eine vor der Linse angeordnete Kollimatorlinse (5), die dazu eingerichtet ist, von der Linse einfallendes Licht in Form von parallelen Lichtstrahlen zu emittieren;
eine vor der Kollimatorlinse angeordnete Fokussierlinse (6), die dazu eingerichtet ist, von der Kollimatorlinse einfallendes Licht zu einem Bilderzeugungspunkt zu bündeln;
eine an dem Bilderzeugungspunkt angeordnete Blende (7), die dazu eingerichtet ist, zumindest einen Teil des durch den Bilderzeugungspunkt tretenden Lichts abzuschirmen; und
eine vor der Fokussierlinse angeordnete Projektionslinse (8) mit einer konvexen Vorderfläche.

2. Beleuchtungsvorrichtung (100) nach Anspruch 1, wobei eine optische Achse der Kollimatorlinse (5) und eine optische Achse der Fokussierlinse (6) miteinander übereinstimmen.

3. Beleuchtungsvorrichtung (100) nach Anspruch 1 oder 2, wobei die parallelen Lichtstrahlen parallel zu einer optischen Achse der Kollimatorlinse (5) sind.

4. Beleuchtungsvorrichtung nach einem der Ansprüche 1 bis 3, wobei die parallelen Lichtstrahlen parallel zu einer optischen Achse der Fokussierlinse (6) sind.

5. Beleuchtungsvorrichtung (100) nach einem der Ansprüche 1 bis 4,
wobei die Fokussierlinse (6) eine konvexe Rückfläche und eine ebene Vorderfläche aufweist, und
wobei die Blende (7) parallel zur Vorderfläche der Fokussierlinse ist.

6. Beleuchtungsvorrichtung (100) nach einem der Ansprüche 1 bis 5, wobei die Blende (7) so angeordnet ist, dass sie einem unteren Abschnitt einer Vorderfläche der Fokussierlinse zugewandt ist.

7. Beleuchtungsvorrichtung (100) nach einem der Ansprüche 1 bis 6, wobei die Blende (7) größer ist als die Fokussierlinse.

8. Beleuchtungsvorrichtung (100) nach einem der Ansprüche 1 bis 7, wobei der Bilderzeugungspunkt zwischen der Projektionslinse (8) und der Fokussierlinse (6) liegt.

9. Beleuchtungsvorrichtung (100) nach Anspruch 8, wobei die Kollimatorlinse (5), die Fokussierlinse (6) und die Projektionslinse (8) jeweils miteinander zusammenfallende optische Achsen aufweisen.

## Revendications

1. Dispositif d'éclairage (100) pour véhicule, qui comprend une partie de source de lumière (200) et une partie de distribution de lumière (300),
dans lequel la partie de source de lumière (200) comprend :
une source de lumière (10) ;
une unité de réflexion (2) sur laquelle la lumière émise par la source de lumière est incidente ;
une lentille (3) présentant une surface avant, dans laquelle l'unité de réflexion est prévue sur une partie de la surface avant ; et
un luminophore réfléchissant (4) disposé derrière la lentille et configuré pour convertir une longueur d'onde de la lumière réfléchie par l'unité de réflexion et réfléchir la lumière convertie en longueur d'onde vers la lentille, et dans lequel la partie de distribution de lumière (300) comprend :
une lentille de collimation (5) disposée devant la lentille et configurée pour émettre la lumière, incidente depuis la lentille, sous la forme de rayons de lumière parallèles ;
une lentille de focalisation (6) disposée devant la lentille de collimation et configurée pour concentrer la lumière, incidente depuis la lentille de collimation, de façon à former un point de formation d'image ;
un écran (7) disposé au niveau du point de formation d'image et configuré pour bloquer au moins une partie de la lumière traversant le point de formation d'image ; et
une lentille de projection (8) qui est disposée devant la lentille de focalisation et présente une surface avant convexe.

2. Dispositif d'éclairage (100) selon la revendication 1, dans lequel un axe optique de la lentille de collimation (5) et un axe optique de la lentille de focalisation (6) coïncident l'un avec l'autre.

3. Dispositif d'éclairage (100) selon la revendication 1 ou 2, dans lequel les rayons de lumière parallèles sont parallèles à un axe optique de la lentille de collimation (5).

4. Dispositif d'éclairage selon l'une quelconque des revendications 1 à 3, dans lequel les rayons de lumière parallèles sont parallèles à un axe optique de la lentille de focalisation (6).

5. Dispositif d'éclairage (100) selon l'une quelconque des revendications 1 à 4,
dans lequel la lentille de focalisation (6) présente une surface arrière convexe et une surface avant plate, et
dans lequel l'écran (7) est parallèle à la surface avant de la lentille de focalisation.

6. Dispositif d'éclairage (100) selon l'une quelconque des revendications 1 à 5, dans lequel l'écran (7) est disposé pour être en regard d'une partie inférieure d'une surface avant de la lentille de focalisation.

7. Dispositif d'éclairage (100) selon l'une quelconque des revendications 1 à 6, dans lequel l'écran (7) présente une taille supérieure à celle de la lentille de focalisation.

8. Dispositif d'éclairage (100) selon l'une quelconque des revendications 1 à 7, dans lequel le point de formation d'image est positionné entre la lentille de projection (8) et la lentille de focalisation (6).

9. Dispositif d'éclairage (100) selon la revendication 8, dans lequel la lentille de collimation (5), la lentille de focalisation (6), et la lentille de projection (8) présentent des axes optiques respectifs coïncidant les uns avec les autres.
